# EUROPEAN PATENT SPECIFICATION

(11) **EP 2 460 714 B1**
(45) Date of publication and mention of the grant of the patent: **12.02.2014**
(21) Application number: 10015206.5
(22) Date of filing: 01.12.2010
(51) Int. Cl.: B62H 1/04

(54) **Motorcycle equipped with a stand device**
Motorrad, das mit einer Ständervorrichtung ausgestattet ist
Motocyclette équipée d'un dispositif de support

(43) Date of publication of application: 06.06.2012
(73) Proprietor: Yamaha Motor Research & Development Europe s.r.l. (YMRE), 20050 Gerno di Lesmo (MI) (IT)
(72) Inventor: Caillon, Christian, 95250 Beauchamp (FR); Suzuki, Yasuhito, 02100 Saint Quentin (FR); Nakaaki, Hajima, 20146 Milano (IT)
(74) Representative: Grünecker, Kinkeldey, Stockmair & Schwanhäusser

(56) References cited:
- EP-A1- 2 226 242
- CN-Y- 201 021 317
- KR-A- 20090 070 733
- US-A1- 2010 283 222

## Description

The present invention relates a motorcycle according to the preamble of independent claim 1. In particular, it is discussed a stand device for a motorcycle and a motorcycle equipped with such a stand device. In more detail, it is discussed a stand device with improved layout and offering improved performance, and to a motorcycle equipped with such a stand device. Still in more detail, it is discussed a stand device allowing to be rotated between a lowered operating position and a retracted stowed position substantially in the same way according to which common so-called "side stand devices" are reciprocated between said lowered operating position and said retracted stowed position, but offering improved performances with respect to both common "side stand devices" and "main stand devices". A motorcycle according to the preamble of independent claim 1 can be taken from the prior art document US 2010/0283222 A1.

It is well known in the field of motorcycles that users of motorcycles (in the following also referred to as riders) pay particular attention not only to the main features and/or performance of motorcycles (such as for instance, speed, power, overall look and appearance) but also to other features relating usually to component parts or devices of motorcycles; in fact, it has been appreciated by the manufactures of motorcycles that riders or potential clients make the decision whether or not to buy a motorcycle or whether to buy a particular motorcycle instead of another motorcycle not only depending on the features and/or performance mentioned above, but also on features relating to component parts or accessory devices of a motorcycle. In other words, it is well known to manufactures of motorcycles that users who appreciate a particular motorcycle due for instance to the high performance and the overall look and appearance of same could decide against buying said particular motorcycle since some particular features and/or component parts and devices of said particular motorcycles are regarded as being not adequate or as not really convincing. Along with the component parts and/or devices which are attentively evaluated by the users and or riders, the stand device may be cited. Accordingly, many efforts have been dedicated over the last years by the manufactures of motorcycles to the development of stand devices and/or apparatus offering improved and adequate performance. However, the development of stand devices, in particular for motorcycles, offering adequate performance and matching the requirements of the users, but still complying with other requirements relating to motorcycles, in particular, to motorbikes, for instance, the overall layout, look and appearance and the overall dimension, has revealed to be a quite difficult and challenging task. In fact, several are the requirements to be accomplished and met by a stand device for a motorcycle. A first requirement for a stand device of a motorcycle relates to the fact that the stand device has to be suitable to be reciprocated between its operating position and its stowed position by means of simple operation and without this operation becoming annoying for the rider. Moreover, riders of all ages must be able to reciprocate and/or operate the stand device between its operating and rest or stowed position. Furthermore the stand device must guarantee adequate reliability, without any risk for the motorcycle or motorbike to fall over once the stand device has been brought into its operating position and the motorcycle or motorbike has been parked. In particular, this reliability must be provided independent of what the conditions on the ground are like at the particular location where the motorcycle or motorbike has to be parked. Still a further requirement to be met by a stand device relates to the fact that the stand device may not negatively influence the overall appearance of the motorcycle or motorbike. Accordingly, big or cumbersome stand devices may not be preferred, even if these offer the required reliability. Moreover, the assembly of the stand device needs to be carried out and exploited according to assembly operations as simple as possible and at reasonable costs. In the same way, maintenance and or substitution of the stand device, in case of damages, may not become a troublesome and complicated operation; otherwise the corresponding costs would become unacceptable. Again, a convenient position has to be found for the stand device when in its stowed position; in particular, the stand device may not negatively influence the travelling of the motorcycle, shall not annoy the rider or passenger during travelling or driving, and may not, as anticipated above, negatively influence the overall appearance and look of the motorcycle and motorbike.

In an attempt to meet as many as possible of the criteria and/or requirements outlined above, several solutions relating in particular to stand devices have been proposed in recent years by the manufactures of motorcycles. Along with the most common solutions proposed in the past by the manufactures of motorcycles, essentially two different stand devices may be mentioned, namely the so-called "main stand device or main stand" and the "side stand device or side stand". Conventional or common main stand devices comprise essentially two leg members rigidly fixed to each other and supported for pivotal movement between a lowered operating position and a retracted stowed position, wherein usually the length of the leg members is more than the distance between the pivoting point of the leg members and the ground; accordingly, during the rotation from the stowed position toward the lowered operating position, the end portions of the legs "opposite to the pivoting point" come into contact with the ground before the legs reach their final operating position. As a result, at least the rear body of the motorcycle has to be pulled up in the upper rear direction by rotating said body around said ground-contacting point of the stand device; moreover, the common main stands provide for maintaining the body of the motorcycle in an upright condition with a rear wheel being lifted up when parking of the motorcycle.

Pulling up the rear end of heavy motorcycles or motorbikes can be very troublesome and at times almost impossible or even dangerous. The same applies also in the case of smaller or lighter motorcycles which are used for business activities, in particular those used for transporting goods and which are therefore usually equipped with a front and/or rear luggage or goods-carrier or a rack. Moreover, especially in those situations in which the user is requested to frequently get on and off the motorcycle or motorbike, for example when delivering post, lifting up the heavy rear body comprising the goods or post can be physically very demanding, even for those who are already in physically good shape and who would normally have no problem lifting up the rear body. In an attempt to overcome the problems mentioned and outlined above, solutions have been proposed or suggested according to which the main stand is activated by a power source, for instance by a hydraulic pump and/or motor. However, this solution is inconvenient for motorcycles of small and/or reduced dimension due to the increase in costs and since it may be difficult to find a convenient location for the power source, and also due to the consumption of power (mostly electrical power delivered by a battery). A further drawback affecting main stand devices of the kind known in the prior art relates to the fact that with the stand device in its operation position, the rear wheel is not in contact with the ground so that the overall motorcycle can pivot on the stand device; however this solution is not convenient for motorcycles or motorbikes used for delivering goods or for business activities. To overcome this particular problem, further solutions have been proposed according to which, with the stand device in its lowered operating position, both the front and the rear wheel are in light contact with the ground; however, also these solutions have been dismissed or set aside since they were revealed to be inconvenient for many applications.

On the other hand, so-called "side stand devices" are also known in the art, which are easier to operate (to be reciprocated between the retracted stowed position and the lowered operating position) than the main devices. Said side devices comprise usually a unique leg member which is pivotally fixed to the motorcycle or motorbike (usually to the main frame thereof) either on the left side or the right side of the motorcycle. Said unique leg member has an overall length which is usually less than the distance between the pivoting point of the leg and the ground. Accordingly, the motorcycle or motorbike does not need to be pulled up when it is requested to park the motorcycle or motorbike or, in other words, when it is requested to rotate down said unique leg member so as to bring same into its operating position. However, in the case of side stand devices, the vehicle body of the motorcycle must be slanted either to the right (when the stand device is mounted on the right side of the motorcycle) or to the left side (when the stand device is mounted on the left side of the motorcycle) upon parking. However, reliability of side stand devices, in particular, in terms of stability of the motorcycle or motorbike during parking has revealed to be not sufficient for several applications, in particular, in the case of heavy or cumbersome motorcycles or even in the case of small or lighter motorcycles but equipped with goods carriers or racks or used for business activities (transporting goods, delivering post or the like). Moreover, in the case of side stand devices, the user or biker, as the need of parking the motorbike or motorbike arises, has to pay particular attention to the conditions of the ground, for instance, he has to pay attention that the end portion of the unique leg, when the motorcycle or motorbike is slanted is not in correspondence with irregularities of the ground, for instance of depressions or stones or the like. In some cases, for instance, when slanting of the motorcycle or motorbike to the left is not possible, it is requested that a motorcycle or motorbike is turned over or moved for the purpose of finding a convenient location for the unique leg. This however in turn may become annoying, especially in those cases in which users are requested to get frequently on and off and to operate under time pressure. Finally, due to the fact that a unique leg is provided, the risk may arise in that the motorcycle loses balance during activation of the stand device.

Further examples of stands for motorcycles can be found in CN201021317Y and KR20090070733A. Moreover, prior art document EP 2 226 242 A1 provide a two-wheeled motor vehicle having a main stand capable of suppressing enlargement of a rear portion of a vehicle body and achieving a vehicle body with a low center of gravity. Said two-wheeled motor vehicle includes a rear arm arranged to extend in a fore-and-aft direction at the rear of an engine. The main stand has paired support legs that extend in the fore-and-aft direction below the rear arm. Said support legs are spaced away from each other in the vehicle width direction. Moreover, a rear portion of a muffler is positioned below the rear arm and between the paired support legs arranged to extend in the fore-and-aft direction, in a plane view of the muffler and the main stand.

It results therefore from the above that, in spite of all the efforts made, the solutions proposed in the past and known in the prior art very often do not meet the essential requirements which have to be taken into account during the design of a motorcycle and a stand device for a motorcycle. In particular, the proposed solutions known in the art very often do not offer the performance requested by the users and revealed to be inconvenient for several applications. In detail, the proposed solutions do not satisfy the need of a stand device which is at the same time reliable in terms of stability of the motorcycle during parking, easy to be activated (reciprocated between the retracted stowed position and the lowered operating position), which maintains these characteristics and performance during the time and does not get damaged or broken, which is light to be mounted to and removed from a motorcycle, which does not negatively influence the overall look and/or appearance of the motorcycle and/or motorbike, and which can be manufactured and produced at reasonable costs.

Accordingly, in view of the above, it is an object of the present invention to provide a stand device for motorcycles and/or motorbikes making it possible to overcome or at least to drastically reduce the problems and/or drawbacks affecting the stand devices known in the prior art. In particular, it is an object of the present invention to provide a stand device for motorcycles and/or motorbikes which offers improved performance in terms of stability of the motorcycle during parking, which is easily activated and/or operated, which does not require that the motorcycle or motorbike be pulled up when the stand device is brought to its operating position and also not when the stand device is brought back to its rest or stowed position, which is of reasonable dimensions and can be manufactured at reasonable costs, which can be easily mounted to and removed from a motorcycle or motorbike, and which can be conveniently located or positioned on said motorcycle or motorbike, thus without affecting the overall look and appearance of the motorbike and without rendering the motorbike too heavy or cumbersome.

In general terms, the present invention is based on the general consideration that the problems affecting the prior art stand devices (both the main stand devices and the side stand devices) may be overcome by providing a stand device adapted to be operated (reciprocated or rotated between a retracted stowed position and a lowered operating position) like a side stand device, i.e. without any need for pulling up or raising the motorcycle or motorbike, but comprising two legs operatively coupled together or even adapted to be operated (rotated or reciprocated between the retracted stowed position and the lowered operating position) simultaneously. In fact, in this case, the common disadvantages of usual main stand devices (relating to the need of pulling up or lifting the motorcycle or motorbike or even to the fact that, during parking, at least one of the wheels of the motorcycle or motorbike is not in contact with the ground) are overcome but still the advantages offered by the usual stand devices may be enjoyed like for instance the easiness of operability of the devices with a unique leg member. Additionally, further advantages are obtained since the user will be allowed to decide whether the motorcycle should be slanted to the left or the right, this without any need for the user to pay attention to the conditions of the ground. A further consideration on which the present is based relates to the fact that further advantages are obtained when the two leg members have a length which is less than the distance between their pivoting points and the ground; in fact, in this case, the two-leg members will be reciprocated between the stowed position and their operating position like a usual, common stand device; however, with both leg members in their operating position, any risk will be avoided that the motorcycle would get out of control, for instance that the motorcycle would fall down to the right when the rider or user intends to slant it to the left. Still a further consideration on which the present invention is made relates to the fact that the stability, sturdiness and robustness of the device may be further improved when the two leg members are firmly joined or fixed to each other. In fact, in this way, the weight acting on one of the leg members (for instance the left leg member when the motorcycle or motorbike has been slanted to the left) will be distributed between the two leg members and will act at least in part also on the right leg member. The same applies when the motorcycle or motorbike has been slanted to the right. Still according to the present invention, further advantages may be obtained when the stand device comprises stoppers or stopping members defining the stowed and lowered operating position of both leg members, respectively (for instance stoppers comprising corresponding abutting surfaces against which the leg members abut in the stowed and operating position). In fact, the rear of the stoppers and the leg members will be reduced over time, since the motorcycle or motorbike will be randomly slanted to the left and to the right, so that the leg members will be loaded and/or subjected to a load randomly and alternatively. Further advantages may be obtained by equipping the stand device with switching means adapted to be operated by one or both the two leg members. For instance, when two switching devices are provided for switching off the engine of the motorcycle or motorbike when the motorcycle or motorbike has been parked (i.e. when the stand device has been brought into its operating position) with each of said switching devices being activated by one of the two leg members, respectively, the engine will be switched off even in the case of one of the two switching devices being damaged or broken since the engine will be switched off by the switching device that is still working properly.

On the basis of the considerations as stated above, according to the present invention, the problems identified above affecting the prior art stand devices are overcome or at least strongly reduced by means of the invention as claimed in independent claim 1.

Further embodiments of the present invention are specified in the dependent claims.

Further advantages, objects and features as well as embodiments of the present invention will become more apparent by means of the following description when taken with reference to the accompanying drawings, in which identical or corresponding parts are identified by the same reference numerals. In particular, in the drawings;
figure 1 relates to a side view of a motorcycle equipped with a stand device according to an embodiment of the present invention;
figure 2 relates to a further side view of the motorcycle of figure 1, depicting in detail the main frame of said motorcycle and other component parts of same;
figure 3 relates to an exploded perspective view of a stand device according to an embodiment of the present invention;
figure 4 relates to a further perspective view of the stand device according to the embodiment of the present invention depicted in figure 3;
figure 5 relates to a perspective view of a portion of the stand device according to an embodiment of the present invention;
figure 6 relates to a rear view of the stand device depicted in figure 5;
figure 7 shows details of the stand device according to an embodiment of the present invention;
figure 8 shows further details of the stand device according to an embodiment of the present invention;
figure 9 shows the electrical layout of an electrical circuit comprising a switch device adapted to be operated by the stand device according to the present invention or even belonging to same;
figures 10a and 10b relate to a side view and a rear view of the stand device according to the present invention.

While the present invention will be clarified in the following by means of a description of those embodiments of the present invention which are depicted in the enclosed drawings, it should be understood that the following detailed description as well as the drawings are not intended to limit the scope of the present invention to the particular embodiments disclosed and/or depicted, but rather that the described illustrated embodiments merely exemplify the various aspects of the present invention, the scope of which is defined by the appended claims.

The present invention is understood to be of particular advantage when applied to motorcycles, in particular motorcycles of contained and/or reduced dimensions like those used for business activities, i.e. for transporting and/or delivering goods or post. For this reason, examples will be given in the following, in which corresponding embodiments of the stand device according to the present invention are applied to motorcycles of this kind. However, it has to be noted that the applications of the stand device or apparatus according to the present invention are not limited to the case of motorcycles used for delivering and/or transporting goods or post or for business activities in general; on the contrary, the stand device or apparatus according to the present invention may also be applied to other motorcycles, in particular to high speed and/or high performance motorcycles or even to motorcross motorcycles or the like.

In the following, some details and features of the stand device or apparatus according to the present invention will be described with reference to the drawings, wherein corresponding or equivalent features are identified by corresponding reference numerals. Moreover, in both the drawings and the following disclosure, terms such as, for instance, front, rear, left and right have to the understood as meaning respectively front, rear, left and right as used from the perspective of a person sitting on the motorcycle implementing the present invention. Moreover, in the following description, two identical reference numerals may be used for identifying "left and right" component parts, even if only one of said two component parts may be depicted in the drawings; for instance, if the description refers to a right and a left element, with only the left element being depicted in the drawings, said left and right elements may be identified by indicating the same reference numerals twice; in the same way, when the description refers to a component part identified by two identical reference numerals (for instance 19, 19) the description may be understood as meaning the a left and a right component part are provided.

In the drawings, reference numeral 100 identifies a motorcycle implementing the stand device 10 according to the present invention; in particular, in the drawings there is depicted a motorcycle 100 particularly suitable for business activities such as, for instance, delivering and/or transporting goods or post or the like. However, it appears clearly from the following disclosure that, as stated above, the applications of the stand device according to the present invention are not limited to the case of the motorcycles as depicted in the drawings but comprise any kind of motorcycle or motorbike.

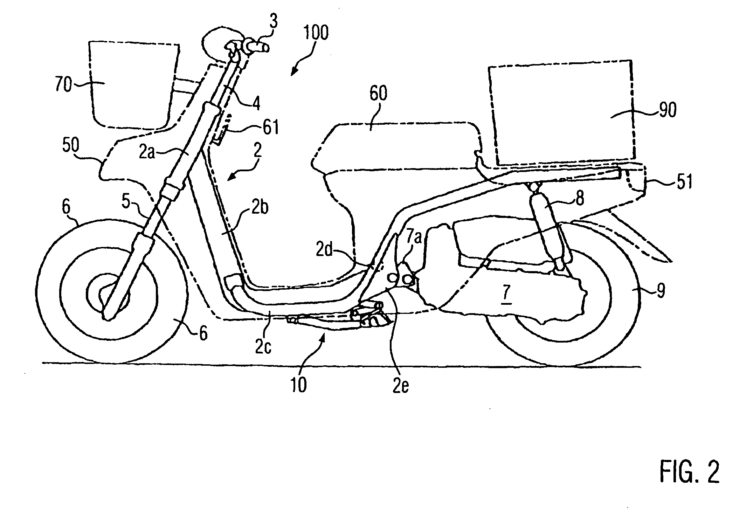

The motorcycle 100 comprises a main frame 2 which in turn comprises a head pipe 2a, an intermediate down tube 2b and left and right rear members 2c, 2c which are connected at front ends thereof to the opposite sides (left and right) of the intermediate down tube 2b and extend rearwardly therefrom, in particular substantially horizontally. A cross pipe 2d is provided between the right and left rear members 2c, 2c of the main frame 2 as depicted in figure 2. The head pipe 2a rotatably supports a steering stem 4 which is connected at upper and lower ends thereof with a handlebar 3 and a front **fork** 5, respectively. A front wheel 2 is rotatably supported between right and left rows of the front fork 5. At the rear portion of the motorcycle, there is disposed a power unit comprising an engine, a transmission case and a rear wheel 9. The power unit is pivotably connected to the frame 2 and constitutes a so-called unit-swing type engine 7. The engine 7 is swingably mounted through a link member 7a to a bracket 2e secured to the frame 2, in particular to the left and right tubes 2c, 2c. Moreover, the rear wheel 9 is driven by the engine through a V-belt gear-changing mechanism mounted in the transmission case and a centrifugal clutch.

The motorcycle 100 is further equipped with a front and a rear carrier or rack 70, **90**, located respectively in front of the head pipe 2a and behind the seat 60. A hook 61 extends from the down tube 2b for allowing luggage like bags or the like to be fixed thereto. Moreover, the motorcycle 100 comprises covering elements for covering and/or protecting component parts and/or devices thereof. A front covering element 50a (possibly formed by a left and a right component element 50a, 50a) is provided for covering and protecting at least partially the front fork 5 and other component parts (not depicted) located in front of the down tube 2b. A further covering or protecting element 50b (possibly comprising a left and a right covering element 50b, 50b) is provided for protecting and covering from the rear side the down tube 2b, the head pipe 2a and the steering stern 4. In the same way, a lower front covering element (possibly comprising a left and a right lower front element 51 a, 51 a) is provided for protecting the front portion of the left and right bottom frame tubes 2c. The left and right cover elements 50c cover the rear portions of the left and right bottom tube 2c, respectively, whilst left and right covering elements 50e cover and/or protect portions of the motorcycle such as, for instance, the shock absorber 8 or the like. Finally, a covering or protecting element possibly comprising a left and a right covering element or member 50d, 50d, is provided for protecting and/or covering component parts located under the seat 60.

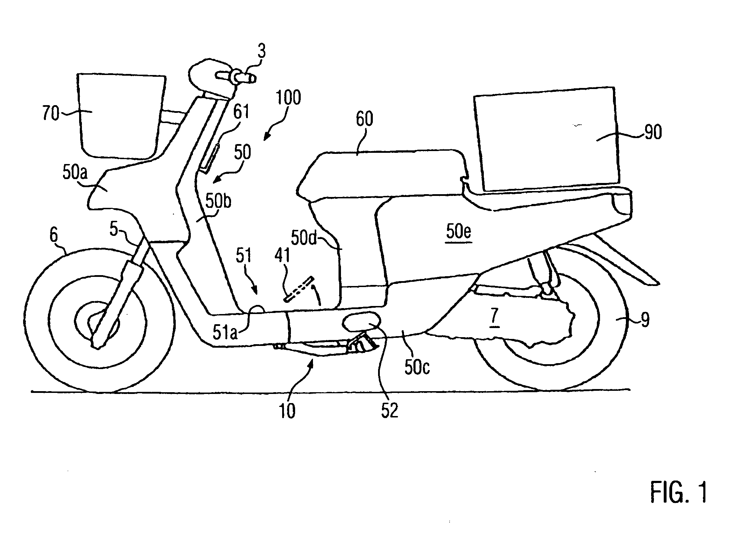

Although in figures 1 and 2 component parts and/or devices such as rear and front lights, rear and front direction indicators, brakes or the like are either not depicted or not identified by reference numerals, it has to be appreciated that the applications of the stand device according to the present invention comprise not only motorcycles or motorbikes equipped with those component parts and/or devices identified and depicted in figures 1 a 2, but also motorcycles comprising additional and/or further component parts or even only some of the component parts and/or devices depicted in figures 1 and 2, depending on the need, circumstances and/or purposes for which the motorcycles will be used.

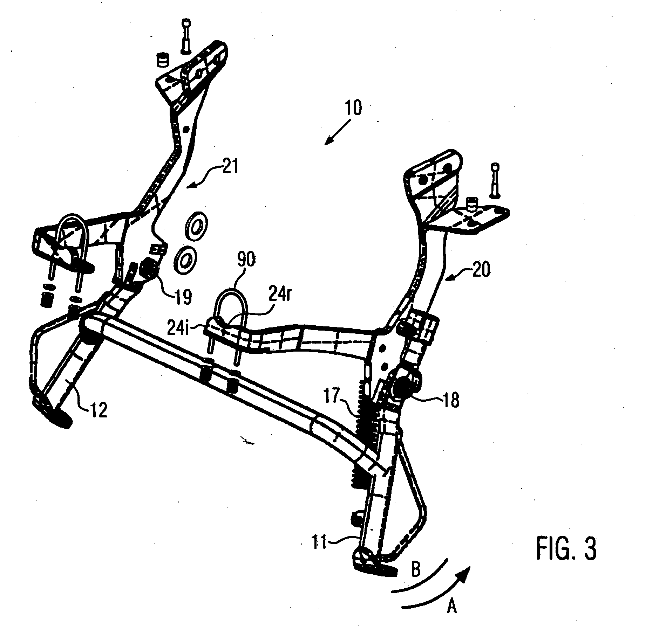

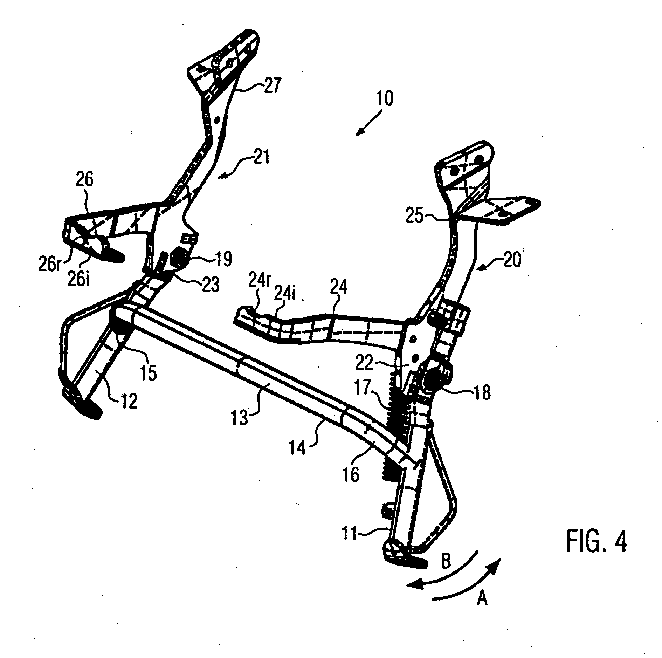

In the following, with reference to figures 3 and 4, some details and features of the stand device according to the embodiment of the present invention depicted therein will be described. In figures 3 and 4, those features already described above with reference to previous figures are identified by the same reference numerals.

In Figures 3 and 4, the stand device according to the embodiment of the present invention depicted therein, is represented as viewed from a person standing on the left side of the motorcycle 100 and looking at said motorcycle diagonally and rearwardly. As apparent from Figures 3 and 4, the stand device 10 comprises a first or left leg member 11 (i.e. adapted to be located on the left side of a motorcycle) and a second or right leg member 12 (i.e. adapted to be located on the right side of said motorcycle). The first or left leg member 11 is adapted to be pivoted on a corresponding left pivoting point or pin 18; in the same way, the right leg member 12 is adapted to be pivoted on a corresponding right pivoting point or pin 19. The pivoting pins 18 and 19 extend substantially in the width direction of the motorcycle and can comprise, according to the needs and or circumstances, bolts, screwed bolts, screws or the like. In the particular embodiment depicted in Figures 3 and 4, the pivoting means 18 comprise a screwed bolt extending through a through hole formed in the upper portion of the leg member 11, and a nut screwed on said bolt. In the same way, the pivoting means 19 comprise a screwed bolt extending through a through hole formed in the upper portion of the right leg member 12 and a screw nut screwed on said screwed bolt. As it will become more apparent by means of the following description, the screwed bolts also extend through through holes formed in fixing means 20, 21, respectively, which are used to fix the stand device to a motorcycle or motorbike. The leg members 11 and 12 are therefore adapted to be reciprocated between a first lowered operating position (represented in Figures 3 and 4) and an upper stowed position. In the lower operating position and represented in Figures 3 and 4, the motorcycle will be kept standing i.e. slanted either to the right or to the left. The leg members 11 and 12 are adapted to be pivoted from the lowered operating position to the upper stowed position by rotating same on their corresponding pivoting points as indicated by the arrows A; in the same way, the leg members 11 and 12 are adapted to be pivoted from the stowed upper position to the lowered operating position by rotating same on their corresponding pivoting points 18 and 19 as indicated by the arrows B. In particular, the leg members 11 and 12 are operatively coupled to each other, meaning that when one of said leg members 11, 12 is reciprocated between its upper and lower position, the other leg member is also reciprocated between its upper and lower position. In more detail, in the particular embodiment depicted in Figures 3 and 4, the two leg members 11 and 12 are firmly fixed and joined together by means of a joining rigid element 13, meaning that the two leg members 11 and 12 are reciprocated between their stowed and operating positions simultaneously. The joining rigid member (for instance a tubular member with a circular cross-section although other solutions may be adopted according to the needs and/or circumstances such as, for instance, element with square sections or the like) comprises a substantially central rectilinear portion 14 and first and second curved portions 16 and 15. The first curved portion 16 extends from one end portion of the rectilinear portion 14 and is interposed between the rectilinear portion 14 and the left leg member 11. In the same way, the second curved portion 15 extends from the second end portion of the rectilinear portion 14 and is interposed between said rectilinear portion 14 and the leg member 12. As it will become more apparent in the following, the shape of the joining element 13 allows the two leg members 11 and 12 to be reciprocated between their upper and the lower positions without any risk for the joining member 13 to interfere with component parts of the motorcycle, thus allowing the joining member 13 to be located conveniently when the first and second leg members 11 and 12 are in their stowed retracted position.

The stand device 10 further comprises left and right fixing means 20, 21, suitable for fixing the leg members 11 and 12, respectively, to a motorcycle. In particular, the fixing means 20 and 21 are V-shaped and each comprises a vertex portion and first and second end portions opposite to said vertex portion, In particular, the left fixing means 20 comprise a vertex portion 22 and first and second end portions 24 and 25 opposite to said vertex portion 22. It appears moreover clearly form Figures 3 and 4 that the pivoting bolt belonging to the pivoting means 18 extends through a through hole provided in the vertex portion 22. In the same way, the right fixing means 21 comprise a vertex portion 23 and first and second end portions 26 and 27 opposite to said vertex portion 23, with said vertex portion 23 comprising a through hole through which the pivoting bolt belonging to the pivoting means 19 extends. The end portions 24, 25 and 26, 27 of the fixing means 20 and 21, respectively, are adapted to be fixed to the frame of a motorcycle, in particular to tubes of said motorcycle. Elastic means 17 are provided for facilitating the leg members 11 and 12 to be reciprocated between their retracted and operating positions; in particular, said elastic means comprise an elastic spring 17 extending between the vertex portion 22 of the fixing means 20 and the leg member 11; according to the needs and/or circumstances, elastic means may be provided so as to extend between the vertex portion 23 of the fixing means 21 and the leg member 12, either in combination with the elastic means 17 (extending between the vertex portion 22 and the leg member 11) or as unique elastic means.

Whilst further details and /or features of the stand device according to the present invention will be disclosed in more detail in the following with reference to further drawings, the operation of the stand device may be already appreciated and can be summarized as follows.

When driving the motorcycle, the stand device 10 will be kept in its retracted position, i.e. with the leg members 11 and 12 extending substantially horizontally. As soon as the need arises of parking the motorcycle, the leg members 11 and 12 are brought into their operating position represented in Figures 3 and 4; to this end, the driver or rider may act either on the left leg member 11 (for instance with his left foot) or on the right leg member 12 (for instance with his right foot). It is important to note that when acting on one of the leg members 11 and 12 for bringing same to their lowered operating position, none of them will come into contact with the ground during the pivoting motion, and even not when they reach the operating position, accordingly, the rider or driver will not be requested to pull up the motorcycle (the rear body thereof) as it is in the case of common main stand devices. With the leg members 11 and 12 in their lowered operating position, the driver will be allowed to decide whether to slant the motorcycle to the left or to the right. If the motorcycle is slanted to the left, then the motorcycle will be kept in a standing position (slanted to the left) essentially by the left leg member, with the end portion thereof (opposite to the pivoting point) contacting the ground; if the motorcycle is slanted to the right, then the motorcycle will be kept in a standing position slanted to the right, essentially by the right leg member 12 (with the end portion thereof opposite to the pivoting point 19 contacting the ground). As soon as the need arises to drive the motorcycle again, the leg members 11 and 12 will first be brought back to their retracted stowed position, again acting either on the left leg member 11 or to the right leg member 12; to this end, the motorcycle has just to be brought first into a position in which none of the leg members 11 and 12 is in contact with the ground, for instance bringing the motorcycle into a standing, substantially upright position. Accordingly, also in this case, no need will arise to lift or pull up the motorcycle. Some of the advantages offered by the stand device according to the present invention can therefore be fully appreciated. For instance, as stated above, the motorcycle can be slanted either to the right or to the left, according to the needs and/or circumstances, in particular, according to the conditions of the ground. Moreover the weight of the motorcycle will be distributed between the two leg members 11 and 12, even if one of them, during parking, is not in contact with the ground.

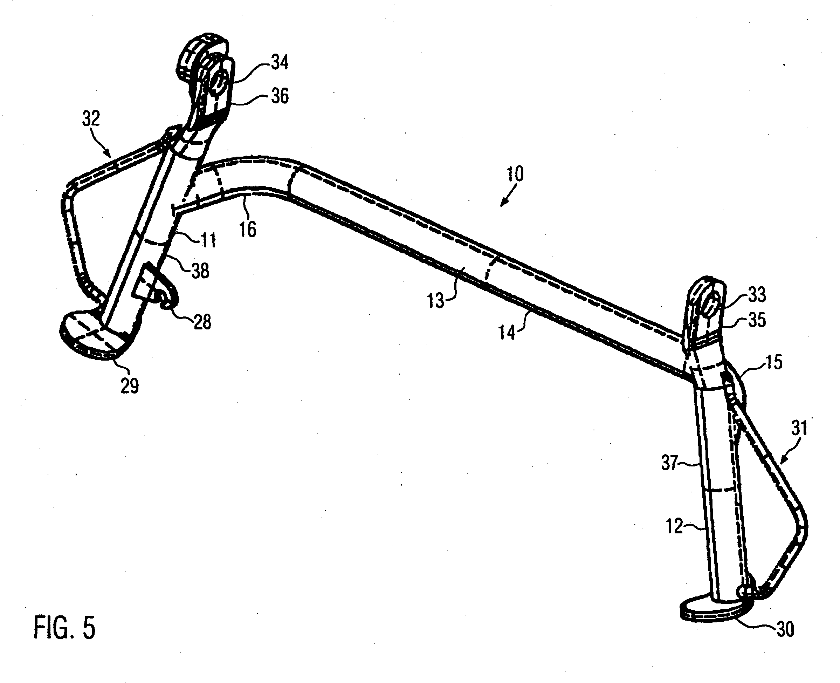

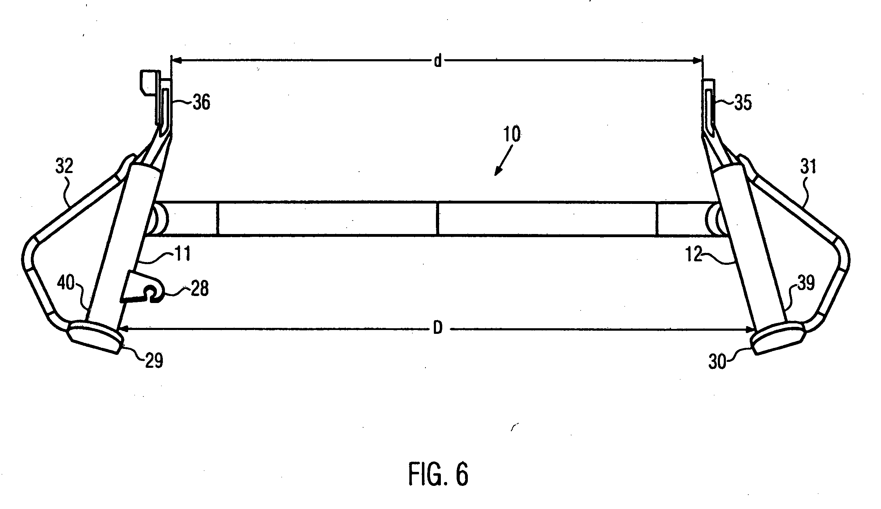

In the following, further details and/or features of the stand device according to the present invention will be described with reference to Figures 5 and 6, wherein features and/or component parts already described above with reference to other figures are identified by the same reference numerals.

In Figure 5, the stand device 10 is represented as viewed from a person standing on the right side of the motorcycle and looking at the motorcycle diagonally and forwardly. In Figure 6, the stand device 10 is depicted as viewed from a person standing behind the motorcycle (behind the stand device 10) and looking toward the front of the motorcycle. As apparent from Figures 5 and 6, the leg member 12 comprises a bracket 31; in the same way, the leg member 11 comprises a bracket 32. The brackets 31 and 32 are provided for the purpose of facilitating the driver or rider of a motorcycle to reciprocate the leg members 11 and 12 between their operating and retracted positions. Moreover, the leg member 12 comprises a flat end portion 35, wherein a through hole 33 is formed for receiving a pivoting bolt of the corresponding pivoting means 19. A tubular portion 37 extends diagonally from the flat portion 35 downwardly and outwardly. In the same way, the leg member 11 comprises a flat portion 36 wherein a through hole 34 is provided for receiving the pivoting bolt of the pivoting means 18. A tubular portion 38 extends diagonally from the flat portion 36 downwardly and outwardly. The tubular portions 37 and 38 extending downwardly and outwardly from the corresponding flat portions 35 and 36 means that the distance d between the flat portions 35 and 36 is less than the distance D between the end portions 39 and 40 opposite to the flat portions 35 and 36, respectively. This improves the stability of the stand device 10 and therefore of the motorcycle when slanted so as to be supported by one of the leg members 12 and 11. Moreover, the leg members 12 and 11 comprise contacting portions 30 and 29, respectively, adapted to come alternatively into contact with the ground when the motorcycle is slanted. These contacting portions comprise each a bent front portion bent upwardly.

A fixing hook 28 extends from the leg member 11, allowing the elastic means (for instance an elastic spring) 17 described above to be fixed thereto. As stated above, a similar fixing hook can be provided so as to extend from the leg member 12, either in addition to the fixing hook 28 or as a unique fixing hook for corresponding unique elastic means.

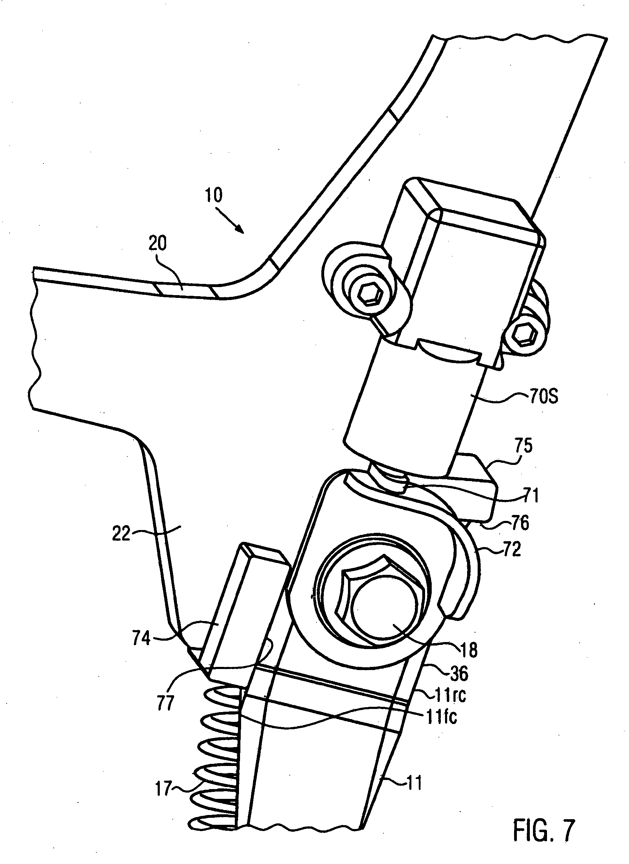

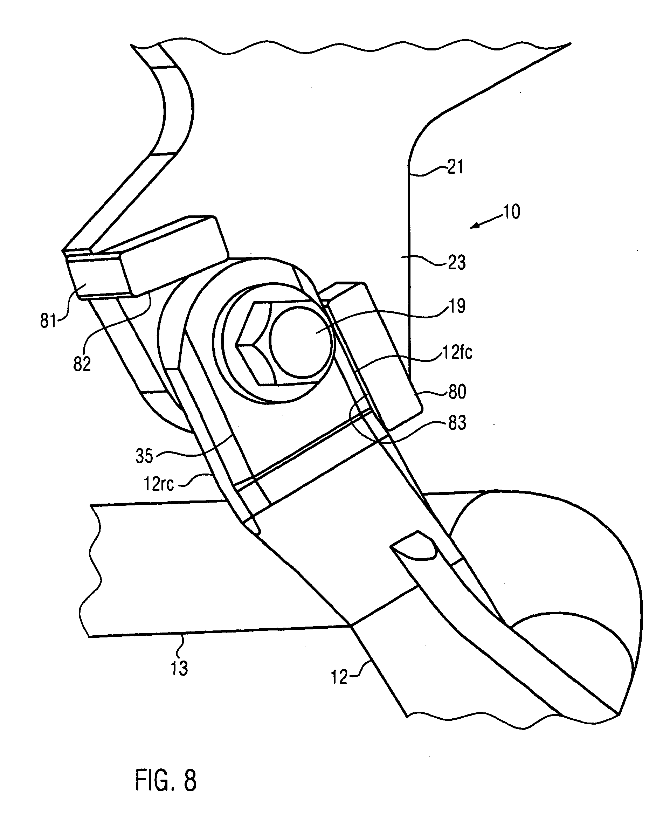

In Figures 7 and 8, further details and/or features of the stand device according to the present invention are depicted; as usual, in Figures 7 and 8, those features of the stand device according to the present invention which have already been disclosed above with reference to other Figures, are identified by the same reference numerals.

As apparent from Figure 7, the stand device 10 comprises switching means (device) 70s adapted to alternatively interrupt and allow the supply of electrical current to the main engine (not depicted in the drawings) and/or to electrical units and/or components (also not depicted in the drawings). In particular, the switching device 70s comprises a moveable element 71 adapted to be reciprocated between a retracted position (depicted in Figure 7) and an extended position (not depicted in the drawings) in which said moveable element 71 extends from the main body of said switch device 70s. The moveable element 71 is adapted to be moved by means of a cam surface 72 protruding from the flat portion 36 of the leg member 11. In particular, the cam surface 72 will not contact the moveable element 71 when the leg member 11 will be in its retracted position; with the leg member 11 in its retracted position, the moveable element will extend from the main body of the switch device 70s so that the main engine or electrical units of the motorcycle will be supplied with electrical current, thus allowing the engine operate and the motorcycle to be used. On the contrary, when the leg member 11 is pivoted from its retracted position to its lowered, operating position (depicted in Figure 7), the surface 72 will contact the moveable element 71 and, due to its curved shape, will push the moveable element 71 back toward the main body of the switch device 70s. With the leg member in its lowered operating position, and therefore with the moveable element 71 in its position as represented in Figure 7, supply of electrical current to the main engine of the motorcycle and/or to electrical units of same will be interrupted so that the main engine will be switched off. This solution improves security of the motorcycle since it will not be possible to drive the motorcycle with the leg members 11 and 12 in their lowered operating position. Moreover, even if the driver should forget to switch off the engine, it will not be possible for the driver or rider to abandon the motorcycle with running main engine, since the main engine will be switched off as soon as the stand device is brought into its lowered operating position.

As apparent from Figure 7, the stand device 10 comprises stopping member 74 and 75 extending from the vertex portion 22 of the fixing means 20; these stopping members or elements are provided for defining the stowed retracted position and the lowered operating position of the leg member 11. In particular, to this end, the stop member or element 74 comprises an abutting surface 77 substantially flat which extends so as to be slightly inclined with respect to the vertical. A corresponding abutting surface 11fc is provided in the flat portion 36 of the leg member 11. This means that when the leg member 11 is brought into its lowered operating position as depicted in Figure 7, the abutting contact surface 11fc will come into contact with the surface 77 of the stopping member 74, in such a way that the leg member 11 will be inclined with respect to the vertical, in particular so that the lower end portion 40 and the contacting portion 29 of the leg member 11 (opposite to the pivoting point 18) will be displaced toward the front of the motorcycle with respect to said pivoting point 18.

As apparent from Figure 8, similar stopping members 81 and 80 are provided so as to protrude from the vertex portion 23 of the fixing means 21, and so as to cooperate with the leg member 12. In particular, said stopping members 80 and 81 define the lowered operating position and the retracted stowed position, respectively, of the leg member 12. To this end, the stopping member 80 comprises a stopping abutting surface 83 substantially flat, oriented so as to be slightly inclined with respect to the vertical, in particular, so that when the front contacting surface 12fc of the leg member 12c will contact said surface 83, the leg member 12 (in its lowered operating position) will be slightly inclined with respect to the vertical, in particular so that the end portion 39 and the contacting portion 30 thereof will be displaced toward the front of the motorcycle with respect to the pivoting point 19. The stopping member 81 also comprises an abutting, stopping surface 82 adapted to cooperate with a corresponding abutting surface 12rc of the leg member 12, in particular of the flat vertex portion 23 thereof. This means that, with the leg member 12 in its retracted stowed position, the surface 12rc thereof will contact the surface 82 of the stopping member 81. In particular, the surface 82 of the stopping member 81 is oriented so that in its retracted, stowed position, the leg member 12 will be oriented so as to extend substantially horizontally. Of course, according to the need and/or circumstances, a unique pair of stopping members may be provided, for instance, either the stopping members 74 and 75 for cooperating with the leg member 11, or two pairs of stopping members 81, 80 and 74, 75 can be provided for cooperating with the leg members 12 and 11, respectively. Providing two pairs of stopping members allows to reduce the wear of the contacting surfaces and to distribute the weight of the motorcycle on both leg members during parking.

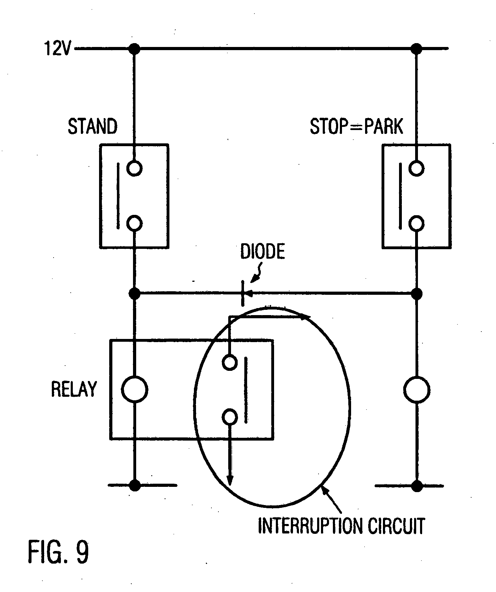

In Figure 9, there is depicted an example of an electrical circuit adapted to be provided in combination with the switching device 70s described above.

As can be seen in Figure 9, the circuit includes a STAND **switch**, a STOP PARK switch, a diode DIODE, and a relay RELAY.

The STAND switch is configured to be in a closed position at least when the stand device (10) is in the lowered operating position. The STOP PARK switch is configured to be in a closed position at least when a user acts on a control intending to prevent the engine of the motorcycle from running.

The STAND switch is connected between a power supply node, for instance a 12V node, and a middle node. The STOP PARK switch is connected between the power supply node, and a node of the diode DIODE, the other node of the diode DIODE being connected to the middle node. It should be noted that the circuit of Figure 9 could work as well without the diode DIODE, by connecting the STOP PARK switch between the power supply node and the middle node. The controlling portion of the relay RELAY is connected between the middle node and a node having a potential lower than the power supply node, for instance a ground node. The controlled portion of the relay RELAY, namely the INTERRUPTION CIRCUIT, is connected between a power supply node and an electric component necessary for the engine operation, for instance the fuel injectors or the fuel injectors controller.

The circuit of Figure 9 operates in the following manner.

When the STAND switch is closed, or when the STOP PARK switch is closed, or when both the STAND switch and the STOP PARK switch are closed, the relay RELAY is controlled so as to open the INTERRUPTION CIRCUIT, resulting in the cut-off of the current to the electric component necessary for the engine operation, thereby effectively **preventing** the engine from running.

When both the STAND switch and the STOP PARK switch are open, the relay RELAY is controlled so as to close the INTERRUPTION CIRCUIT, thereby allowing engine operation.

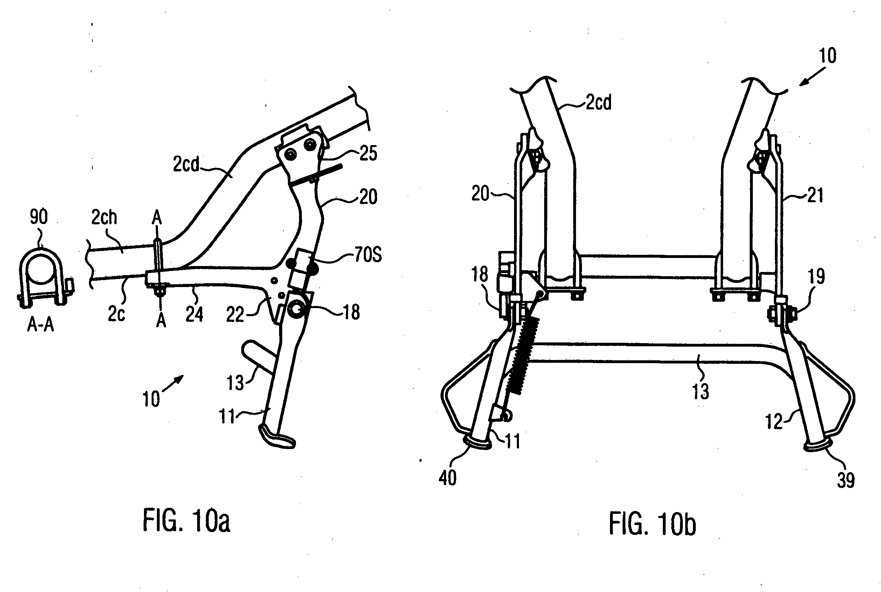

When looking at Figures 10a and 10b, further details of the fixing means 20 and 21 cited above may be better **appreciated** and/or understood. For the sake of convenience, description will be given in the following of the left fixing means **(element)** 20; however, it has to be appreciated that the following description also applies to the right fixing means **(element)** 21. Moreover, for better appreciating the details to be described in the following, reference is also made to Figures 3 and 4.

As anticipated above, the fixing means 20 are V-shaped and comprise a vertex portion 22 where the leg member 11 is pivotable fixed so as to be pivotable on pivoting point or pin 18. Moreover, the fixing means 20 comprise two opposite end portions 24 and 25. End portion 24 is adapted to be fixed to a tube 2c of the main frame of a motorcycle, with this tube 2c extending substantially on the left side of said motorcycle in the front-rear direction. In particular, end portion 24 is adapted to be fixed to a portion 2ch of said tube 2c extending substantially horizontally, whilst end portion 25 of fixing means 20 is adapted to be fixed to a portion 2cd of said tube 2c extending from said horizontal portion 2ch substantially diagonally and upwardly. To this end, the end fixing portion 24 comprises (see Figures 3 and 4) an inwardly extending portion 24i extending substantially in the width direction of the motorcycle, said inwardly extending portion 24i comprising a recessed portion 24r being shaped so as to be adapted to receive said substantially horizontally extending portion 2ch of said tube 2c. Bowled or arched shaped fixing means 90 of the kind depicted in Figure 3 may be used according to the need and/or circumstances for fixing the end portion 24 of fixing means 20 to the tube 2c. The other end portion 25 of fixing means 20 opposite to the vertex portion 22 is fixed to the portion 2cd of tube 2c by means for instance of screws or the like.

A further important feature of the stand device 10 according to the present inventions may be appreciated when looking at Figures 10a and 10b. In Figure **10a**, the stand device 10 is depicted **in** the lowered operating position. In the retracted, stowed position, the leg members 11 and 12 are oriented so as to extend substantially horizontally. Moreover, in the lowered, operating position, the leg members 11 and 12 are slightly inclined with respect to the vertical, with the end portions thereof opposite to the pivoting points being displaced toward the front of the motorcycle (toward the left in Figure **10a**) with respect to said pivoting points. When looking at Figure **10b**, it may be appreciated that the leg members 11 and 12 extend diagonally outwardly, namely with the end portions thereof opposite to the pivoting points being displaced outwardly with respect to said pivoting points. In particular, the end portion 40 of the leg member 11 is displace upwardly with respect to the corresponding pivoting point 18; in the same way, the end portion 39 of the leg member 12 is displaced upwardly with respect to the corresponding pivoting portion 19. Finally, during the reciprocating motion of the leg members 11,12, none of them comes into contact with the ground when the motorcycle is not excessively slanted to the left or to the right or, in other words, when the motorcycle is maintained in a standing position substantially upright. When the need arises of parking the motorcycle, the motorcycle can be slanted either to the right or to the left, thus bringing either the right leg member or the left leg member into contact with the ground.

This is, in particular, due to the fact that for each leg member the overall length of same or, in other words, the distance between its pivoting point and the end portion opposite to the pivoting point is less than the distance between the pivoting point and the ground.

It arises therefore from the above disclosure that the stand device according to the present invention allows to overcome or at least to strongly reduce the problems affecting the stand devices known in the prior art. In particular, with the present invention, evident advantages in terms of improved functionality of the stand devices, as well as in terms of contained dimensions thereof, in terms of simplified assembly procedure, in terms of reduced and/or contained assembly costs, and finally in terms of improved reliability are obtained. It may be in particular stated that one of the most important advantages offered by the stand device according to the present invention relates to the fact that the stand device according to the present invention may be operated almost in the same way in which a common side stand device is operated, but offers also the advantages of main stand devices, without being affected by the disadvantages of common main stand devices.

While the present invention has been clarified by means of a description of its particular and/or preferred embodiments depicted in the drawings, it has to be understood that the present invention is not limited to the particular embodiments described and/or depicted in the drawings. For instance, while an embodiment of the present invention has been described according to which a unique switch device is provided, it has to be noted that the present invention also comprises embodiments according to which two switching devices are provided, with said two switching devices adapted to be activated by the leg members, respectively. In this way, in case of damage of one of the switching devices, the main engine of the motorcycle will still be switched off by bringing the stand device into its lowered operating position. Moreover, even if embodiments of the present invention have been described according to which the length of the leg members is fixed and predefined, the present invention also comprises embodiments according to which the length of one or both the leg members may be modified according to the need and/or circumstances, either manually or by means of devices (for instance hydraulic devices) adapted to this end. In the same way, the length of the two leg members may be different i.e. the left leg member may be either longer or shorter than the right leg member.

## Claims

1. Motorcycle (100) comprising a main frame (2) with left an right rear members (2c) and a stand device (10) for supporting said motorcycle (100) during parking so as to keep said motorcycle standing, said stand device (10) comprising a left leg member (11) and a right leg member (12) each fixed to said motorcycle (100) at a corresponding pivoting point (18, 19) and adapted to be pivoted and/or reciprocated between a retracted stowed position and a lowered operating position in which said motorcycle is kept standing, wherein in that said left and right leg member (11, 12) are operatively coupled together so that when one of said leg members is reciprocated between said stowed position and said lowered position, the other leg member is also reciprocated between said stowed position and said lowered position, thus allowing said motorcycle to be kept in a standing slanted position, wherein when said left and right leg member (11, 12) are reciprocated between said stowed position and said operating position with the motorcycle maintained in a standing position substantially upright none of them comes into contact with the ground, said stand device (10) comprises fixing means firmly fixing said stand device (10) to the main frame (2) of said motorcycle, said fixing means comprise a left fixing element (20) and a right fixing element (21) fixing the leg members to said main frame (2) of said motorcycle,
**characterized in that**
the left fixing element (20) is fixing the left leg member (11) to the left rear member (2c) of the main frame (2) and the right fixing element (21) is fixing the right leg member (12) the left rear member (2c) of the main frame (2), each of said left and right fixing elements (20,21) comprises a vertex portion, and the left leg member (11) is pivotally fixed to said vertex portion (22) of the left fixing element (20), and the right leg member (12) is pivotally fixed to said vertex portion (22) of the right fixing element (21), said left and right fixing elements (20,21) are V-shaped, respectively, and each of said left and right fixing element (20,21) comprises first and second end portions (24,25) opposite to said vertex portion (22), wherein said first end portions (24) of said left and right fixing element (20,21), respectively, are fixed to corresponding left and right rear member (2c) of the main frame (2) extending substantially horizontally, and said second end portions (25) of said left and right fixing element (20,21), respectively, are fixed to corresponding left and right rear member (2c) of the main frame (2) extending rearward and upward from said substantially horizontal left and right rear member (2c), respectively.

2. A motorcycle as claimed in claim 1, **characterized in that** said left and right leg member (11, 12) are operatively coupled together in such a way that said left and right leg member (11, 12) are reciprocated between said stowed position and said lowered position simultaneously.

3. A motorcycle as claimed in one of claims 1 and 2, **characterized in that** a distance between the corresponding pivoting point and an end portion of the respective left and right leg member (11, 12) opposite to said pivoting point (18) is less than the distance between said pivoting point and the ground with the motorcycle maintained in a standing position substantially upright.

4. A motorcycle as claimed in one of claims 1 to 3, **characterized in that** said left and right leg member (11, 12) are firmly fixed and joined to each other, thus allowing said motorcycle to be kept in a standing position either slanted to the right or to the left.

5. A motorcycle as claimed in claim 4, **characterized in that** said left and right leg member (11, 12) are fixed and joined to each other by means of a joining rigid element (13).

6. A motorcycle as claimed in claim 5, **characterized in that** said joining rigid element (13) comprises at least one portion (14) substantially rectilinear and extending substantially in the motorcycle width direction.

7. A motorcycle as claimed in one of claims 1 to 6, **characterized in that** said stand device (10) comprises a switching device (70s) cooperating with the electrical system of said motorcycle for interrupting the supply of electrical current to a main engine of said motorcycle when said left and right leg member (11, 12) are in its lowered operating position.

8. A motorcycle as claimed in claim 7, **characterized in that** said switching device (70s) comprises a movable element (71) adapted to be reciprocated between a first position and a second position by one of said left and right leg member (11, 12), and when said one of said left and right leg member (11, 12) is moved to its lowered operating position said movable element (71) of said switching device (70s) is moved to its first position in which supply of electrical current to said main engine is interrupted, whilst when said at least one of said left and right leg member (11, 12) is moved to its stowed position said movable element (71) is moved to its second position, thus allowing electrical current to be supplied to said main engine.

9. A motorcycle as claimed in claim 8, **characterized in that** said movable element (71) of said switching device (70s) is reciprocated between its first and second positions by means of a cam surface (72) firmly fixed to said at least one of said left and right leg member (11, 12) and cooperating with said movable element (71).

10. A motorcycle as claimed in one of claims 1 to 9, **characterized in that** said stand device (10) further comprises stopping means (74, 75; 80, 81) defining said stowed position and said lowered position for at least one of said left and right leg member (11, 12).

11. A motorcycle as claimed in claim 10, **characterized in that** said stopping means comprises a first abutting surface (76) adapted to be contacted by said one leg member (11) in its stowed position and a second abutting surface (77) adapted to be contacted by said one leg member (11) in its operating position.

12. A motorcycle as claimed in claim 11, **characterized in that** said first and second abutting surfaces (76, 77) are located in the proximity of the pivoting point (18) of said one leg member.

13. A motorcycle as claimed in one of claims 11 and 12, **characterized in that** said second abutting surface (77) is oriented so that when said one leg member (11) contacts said first abutting surface (77), said one leg member (11) is inclined with respect to the vertical, with the end portion (40) of said leg member opposite to its pivoting point (18) being displaced toward the front of the motorcycle with respect to said pivoting point (18).

14. A motorcycle as claimed in one of claims 11 to 13, **characterized in that** said stopping means comprise a third abutting surface (82) adapted to be contacted by the other of said left and right leg member (11, 12) in its stowed position and a fourth abutting surface (83) adapted to be contacted by said other leg member (12) in its operating position.

## Patentansprüche

1. Motorrad (100), aufweisend einen Hauptrahmen (2) mit linken und rechten hinteren Teilen (2c) und einer Ständervorrichtung (10) zum Aufstellen des Motorrades (100) während des Parkens, um das Motorrad stehend zu halten, wobei die Ständervorrichtung (10) ein linkes Beinteil (11) und ein rechtes Beinteil (12) aufweist, jedes an dem Motorrad (100) an einem entsprechenden Schwenkpunkt (18, 19) befestigt und vorgesehen, um geschwenkt und / oder zwischen einer zurückgezogenen verstauten Position und einer abgesenkten Betriebsposition, in der das Motorrad stehend gehalten wird, hin- und hergehend bewegt zu werden, wobei dadurch, dass das linke und rechte Beinteil (11, 12) betrieblich zusammen gekuppelt sind, so dass dann, wenn eines der Beinteile zwischen der verstauten Position und der abgesenkten Position hin- und herbewegt wird, das andere Beinteil auch zwischen der verstauten Position und der abgesenkten Position hin- und herbewegt wird, um somit dem Motorrad zu gestatten, in einer stehenden, schrägen Position gehalten zu werden, wobei, wenn das linke und rechte Beinteil (11, 12) zwischen der verstauten Position und der Betriebsposition, in der das Motorrad in einer stehenden Position, im Wesentlichen aufrecht ist, hin- und hergehend bewegt werden, keines von ihnen mit dem Boden in Kontakt kommt, die Ständervorrichtung (10) eine Befestigungseinrichtung aufweist, die die Ständervorrichtung (10) fest an dem Hauptrahmen (2) des Motorrades befestigt, wobei die Befestigungseinrichtung ein linkes Befestigungsbauteil (20) und ein rechtes Befestigungsbauteil (21) aufweist, die die Beinteile an dem Hauptrahmen (2) des Motorrades befestigen,
**dadurch gekennzeichnet, dass**
das linke Befestigungsbauteil (20) das linke Beinteil (11) an dem linken hinteren Teil (2c) des Hauptrahmens (2) befestigt und das rechte Befestigungsbauteil (21) das rechte Beinteil (12) an dem linken hinteren Teil (2c) des Hauptrahmens (2) befestigt, wobei jedes der linken und rechten Befestigungsbauteile (20, 21) einen Scheitelabschnitt aufweist und das linke Beinteil (11) schwenkbar an dem Scheitelabschnitt (22) des linken Befestigungsbauteils (20) befestigt ist und das rechte Beinteil (12) schwenkbar an dem Scheitelabschnitt (22) des rechten Befestigungsbauteils (21) befestigt ist, wobei das linke und rechte Befestigungsbauteil (20, 21) jeweils V-förmig ist und jedes der linken und rechten Befestigungsbauteile erste und zweite Endabschnitte (24, 25) gegenüberliegend dem Scheitelabschnitt (22) aufweist, wobei die ersten Endabschnitte (24) des linken und rechten Befestigungsbauteils (20, 21) jeweils an entsprechenden linken und rechten hinteren Teilen (2c) des Hauptrahmens (2), der sich im Wesentlichen horizontal erstreckt, befestigt sind, und die zweiten Endabschnitte (25) der linken und rechten Befestigungsbauteile (20, 21) jeweils an entsprechenden linken und rechten hinteren Teilen (2c) des Hauptrahmens (2), befestigt sind, der sich nach hinten und nach oben von dem im Wesentlichen horizontalen jeweils linken und rechten hinteren Teil (2c) erstreckt.

2. Motorrad nach Anspruch 1, **dadurch gekennzeichnet, dass** das linke und rechte Beinteil (11, 12) betrieblich in solch einer Weise zusammen gekuppelt sind, dass das linke und rechte Beinteil (11, 12) gleichzeitig zwischen der verstauten Position und der abgesenkten Position hin- und hergehend bewegt werden.

3. Motorrad nach einem der Ansprüche 1 oder 2, **dadurch gekennzeichnet, dass** ein Abstand zwischen dem entsprechenden Schwenkpunkt und einem Endabschnitt des jeweiligen linken und rechten Beinteils (11, 12), gegenüberliegend dem Schwenkpunkt (18), geringer ist als der Abstand zwischen dem Schwenkpunkt und dem Boden, wenn das Motorrad in einer stehenden Position, im Wesentlichen aufrecht gehalten ist.

4. Motorrad nach einem der Ansprüche 1 bis 3, **dadurch gekennzeichnet, dass** das linke und rechte Beinteil (11, 12) fest miteinander befestigt und verbunden ist, um somit dem Motorrad zu gestatten, in einer stehenden Position, entweder schräg nach rechts oder nach links geneigt gehalten zu werden.

5. Motorrad nach Anspruch 4, **dadurch gekennzeichnet, dass** das linke und rechte Beinteil (11, 12) befestigt und miteinander mittels eines steifen Verbindungsbauteilen (13) verbunden ist.

6. Motorrad nach Anspruch 5, **dadurch gekennzeichnet, dass** das verbindende steife Verbindungsbauteil (13) zumindest einen Abschnitt (14) aufweist, der sich im Wesentlichen rechtwinkelig und im Wesentlichen in Richtung der Breite des Motorrades erstreckt.

7. Motorrad nach einem der Ansprüche 1 bis 6, **dadurch gekennzeichnet, dass** die Ständervorrichtung (10) eine Schaltvorrichtung (70s) aufweist, die mit dem elektrischen System des Motorrades zum Unterbrechen der Zuführung des elektrischen Stromes zu einer Hauptbrennkraftmaschine des Motorrades zusammenwirkt, wenn das linke und rechte Beinteil (11, 12) in ihrer abgesenkten Betriebsposition sind.

8. Motorrad nach Anspruch 7, **dadurch gekennzeichnet, dass** die Schaltvorrichtung (70s) ein bewegbares Bauteil (71) aufweist, vorgesehen, um zwischen einer ersten Position und einer zweiten Position durch eines der linken oder rechten Beinteile (11, 12) hin- und hergehend bewegt zu werden, und wenn eines der linken oder rechten Beinteile (11, 12) zu seiner abgesenkten Betriebsposition bewegt wird, das bewegbare Bauteil (71) der Schaltvorrichtung (70s) in seine erste Position bewegt wird, in der die Zuführung des elektrischen Stromes zu der Hauptbrennkraftmaschine unterbrochen ist, während, wenn das zumindest eine der linken oder rechten Beinteile (11, 12) in seine abgesenkte Position bewegt wird, das bewegbare Bauteil (71) in seine zweite Position bewegt wird, um somit dem elektrischen Strom zu gestatten, zu der Hauptbrennkraftmaschine zugeführt zu werden.

9. Motorrad nach Anspruch 8, **dadurch gekennzeichnet, dass** das bewegbare Bauteil (71) der Schaltvorrichtung (70s) zwischen seiner ersten und zweiten Position mittels einer Nockenoberfläche (72), fest an zumindest einem von dem linken oder rechten Beinteil (11, 12) befestigt, hin- und hergehend bewegt wird und mit dem bewegbaren Bauteil (71) zusammenwirkt.

10. Motorrad nach einem der Ansprüche 1 bis 9, **dadurch gekennzeichnet, dass** die Ständervorrichtung (10) außerdem Anschlagmittel (74, 75, 80, 81) aufweist, die die verstaute Position und die abgesenkte Position für zumindest eines von dem linken oder rechten Beinteil (11, 12) definieren.

11. Motorrad nach Anspruch 10, **dadurch gekennzeichnet, dass** die Anschlageinrichtung eine erste Anlageoberfläche (76) aufweist, vorgesehen, um mit dem einen Beinteil (11) in seiner verstauten Position in Kontakt zu kommen, und eine zweite Anlageoberfläche (77), vorgesehen, um mit dem einen Beinteil (11) in seiner Betriebsposition in Kontakt zu kommen.

12. Motorrad nach Anspruch 11, **dadurch gekennzeichnet, dass** die ersten und zweiten Anlageoberflächen (76, 77) in der Nähe des Schwenkpunktes (18) des einen Beinteiles angeordnet ist.

13. Motorrad nach einem der Ansprüche 11 und 12, **dadurch gekennzeichnet, dass** die zweite Anlageoberfläche (77) so ausgerichtet ist, dass ein Beinteil (11) die erste Anlageoberfläche (77) berührt, wobei das eine Beinteil (11) in Bezug auf die Senkrechte geneigt ist, wobei der Endabschnitt (40) des Beinteiles gegenüberliegend zu seinem Schwenkpunkt (18) in Richtung zu der Vorderseite des Motorrades in Bezug auf den Schwenkpunkt (18) verlagert ist.

14. Motorrad nach einem der Ansprüche 11 bis 13, **dadurch gekennzeichnet, dass** die Anschlagmittel eine dritte Anlageoberfläche (82) aufweisen, vorgesehen durch das andere von dem linken oder rechten Beinteil (11, 12) in der verstauten Position berührt zu werden, und eine vierte Anlageoberfläche (83) vorgesehen ist, durch das andere Beinteil (12) in seiner Betriebsposition berührt zu werden.

## Revendications

1. Motocyclette (100) comprenant un cadre principal (2) avec des éléments arrières gauche et droit (2c) et un dispositif de support (10) destiné à supporter ladite motocyclette (100) pendant un stationnement de façon à maintenir stationnaire la motocyclette, ledit dispositif de support (10) comprenant un élément de montant gauche (11) et un élément de montant droit (12) chacun étant fixé à ladite motocyclette (100) au niveau d'un point de pivot correspondant (18, 19) et conçu pour qu'on le fasse pivoter et/ou aller en va-et-vient entre une position repliée rétractée et une position de fonctionnement abaissée dans laquelle ladite motocyclette est maintenue stationnaire, dans laquelle lesdits éléments de montants gauche et droit (11, 12) sont couplés ensemble fonctionnellement de telle sorte que lorsque l'un desdits éléments de montants va et vient entre ladite position en position repliée et ladite position abaissée, l'autre élément de montant va et vient également entre ladite position repliée et ladite position abaissée, ce qui permet ainsi à ladite motocyclette d'être maintenue dans une position stationnaire penchée, dans laquelle lorsque lesdits éléments de montants gauche et droit (11, 12) vont et viennent entre ladite position repliée et ladite position de fonctionnement, la motocyclette étant maintenue dans une position stationnaire sensiblement droite, aucun de ceux-ci ne vient en contact avec le sol, ledit dispositif de support (10) comprend un moyen de fixation fixant fermement ledit dispositif de support (10) sur le cadre principal (2) de ladite motocyclette, ledit moyen de fixation comprend un élément de fixation gauche (20) et un élément de fixation droit (21) qui fixe les éléments de montants au dit cadre principal (2) de ladite motocyclette,
**caractérisée en ce que**
l'élément de fixation gauche (20) fixe l'élément du montant gauche (11) sur l'élément arrière gauche (2c) du cadre principal (2) et l'élément de fixation droit (21) fixe l'élément de montant droit (12) sur l'élément arrière gauche (2c) du cadre principal (2), chacun desdits éléments de fixation gauche et droit (20, 21) comprend une partie formant sommet et l'élément de montant gauche (11) est fixé avec une possibilité de pivotement à ladite partie formant sommet (22) de l'élément de fixation gauche (20), et l'élément de montant droit (12) est fixé avec une possibilité de pivotement à ladite partie formant sommet (22) de l'élément de fixation droit (21) lesdits éléments de fixation gauche et droit (20, 21) prennent respectivement une forme de V et chacun dudit élément de fixation gauche et droit (20, 21) comprend des première et seconde parties d'extrémité (24, 25) opposées à ladite partie formant sommet (22) dans laquelle lesdites premières parties d'extrémité (24) desdits éléments de fixation gauche et droit (20, 21) sont respectivement fixés à des éléments arrière gauche et droit correspondants du cadre principal (2) s'étendant sensiblement horizontalement, et lesdites seconde partie d'extrémité (25) desdits éléments de fixation gauche et droit (20, 21) sont respectivement fixées à l'élément correspondant arrière gauche et droit (2c) du cadre principal (2) s'étendant respectivement vers l'arrière et vers le haut à partir desdits éléments sensiblement horizontaux arrière gauche et droite (2c).

2. Motocyclette selon la revendication 1, **caractérisée en ce que** lesdits éléments de montants gauche et droit (11, 12) sont fonctionnellement couplés ensemble de manière telle que lesdits éléments de montants gauche et droit (11, 12) vont et viennent simultanément entre ladite position repliée et ladite position abaissée.

3. Motocyclette selon l'une des revendications 1 et 2, **caractérisée en ce que** la distance entre le point de pivot correspondant et une partie d'extrémité des éléments de montants gauche et droit respectifs (11, 12), opposés au dit point de pivot (18) est plus petite que la distance entre ledit point de pivot et le sol, la motocyclette étant maintenue dans une position stationnaire sensiblement droite.

4. Motocyclette selon l'une des revendications 1 à 3, **caractérisée en ce que** lesdits éléments de montants gauche et droit (11, 12) sont fermement fixés et reliés l'un et l'autre ce qui permet de maintenir ladite motocyclette dans une position stationnaire soit penchée vers la droite, soit vers la gauche.

5. Motocyclette selon la revendication 4, **caractérisée en ce que** lesdits éléments de montants gauche et droit (11, 12) sont fixés et reliés l'un à l'autre au moyen d'un élément rigide de jonction (13).

6. Motocyclette selon la revendication 4, **caractérisée en ce que** ledit élément rigide de jonction (13) comprend au moins une partie (14) sensiblement rectilinéaire et s'étendant sensiblement dans la direction de la largeur de la motocyclette.

7. Motocyclette selon l'une des revendications 1 à 6, **caractérisée en ce que caractérisée en ce que** ledit dispositif de support (10) comprend un dispositif de commutation (70s) coopérant avec le système électrique de ladite motocyclette pour interrompre l'alimentation en courant électrique du moteur principal de ladite motocyclette lorsque lesdits éléments de montants gauche et droit (11, 12) se trouvent dans leur position de fonctionnement abaissée.

8. Motocyclette selon la revendication 7, **caractérisée en ce que** ledit dispositif de commutation (70s) comprend un élément mobile (71) conçu pour aller et venir entre une première position et une seconde position grâce à l'un desdits éléments de montants gauche et droit (11, 12), et l'un desdits éléments de montants gauche et droit (11, 12) est déplacé jusqu'à sa position de fonctionnement abaissée, ledit élément mobile (71) dudit dispositif de commutation (70s) est déplacé jusqu'à sa première position dans laquelle est interrompue l'alimentation de courant électrique dudit moteur principal alors que lorsque l'un desdits éléments de montants gauche et droit (11, 12) est déplacé jusqu'à sa position repliée, ledit élément mobile (71) est déplacé jusqu'à sa seconde position ce qui permet de fournir du courant électrique au dit moteur principal.

9. Motocyclette selon la revendication 8, **caractérisée en ce que** ledit élément mobile (71) dudit dispositif de commutation (70s) va et vient entre ses première et seconde positions un moyen de la surface d'une came (72) fermement fixée audit ou auxdits l'un desdits éléments de montants gauche et droit (11, 12) et coopère avec ledit élément mobile (71).

10. Motocyclette selon l'une des revendications 1 à 9, **caractérisée en ce que** ledit dispositif de support (10) comprend en outre un moyen d'arrêt (74, 75 ; 80, 81) définissant ladite position repliée et ladite position abaissée pour au moins l'un desdits éléments de montants gauche et droit (11, 12).

11. Motocyclette selon la revendication 10, **caractérisée en ce que** ledit moyen d'arrêt comprend une première surface formant butée (76) conçue pour entrer en contact avec ledit premier élément de montant (11) dans sa position repliée et une deuxième surface formant butée (77) conçue pour entrer en contact avec ledit premier élément de montant (11) dans sa position de fonctionnement.

12. Motocyclette selon la revendication 11, **caractérisée en ce que** lesdites première et seconde surfaces formant butée (76, 77) sont situées à proximité du point de pivot (18) dudit premier élément de montant.

13. Motocyclette selon l'une des revendications 11 et 12, **caractérisée en ce que** ladite deuxième surface formant butée (77) est orientée de telle sorte que lorsque ledit premier élément de montant (11) est en contact avec ladite première surface formant butée (77), ledit premier élément de montant (11) est incliné par rapport à la verticale, la partie terminale (40) dudit élément de montants qui est opposée à son point de pivot (18) est déplacée vers l'avant de la motocyclette par rapport au dit point de pivot (18).

14. Motocyclette selon l'une des revendications 11 à 13, **caractérisée en ce que** ledit moyen d'arrêt comprend une troisième surface formant butée (82) conçue pour entrer en contact avec l'autre dudit élément de montant gauche et droit (11, 12) dans sa position repliée et une quatrième surface formant butée (83) conçue pour entrer en contact avec ledit autre élément de montants (12) dans sa position de fonctionnement.
